(19)

**Europäisches Patentamt**
**European Patent Office**
**Office européen des brevets**

(11) **EP 3 358 030 B1**

(12) **EUROPEAN PATENT SPECIFICATION**

(45) Date of publication and mention
of the grant of the patent:
**14.10.2020 Bulletin 2020/42**

(21) Application number: **16850796.0**

(22) Date of filing: **06.07.2016**

(51) Int Cl.:
*C22C 38/00* (2006.01)   *C21D 8/00* (2006.01)
*C21D 8/02* (2006.01)   *C22C 38/58* (2006.01)
*C22C 38/02* (2006.01)   *C22C 38/06* (2006.01)
*C22C 38/20* (2006.01)   *C22C 38/44* (2006.01)
*C22C 38/48* (2006.01)   *C22C 38/50* (2006.01)
*C22C 38/04* (2006.01)   *C22C 38/12* (2006.01)
*C22C 38/14* (2006.01)   *C22C 38/22* (2006.01)
*C22C 38/24* (2006.01)   *C22C 38/26* (2006.01)
*C22C 38/32* (2006.01)   *C22C 38/38* (2006.01)
*C21D 7/13* (2006.01)   *C21D 6/00* (2006.01)
*C22C 38/42* (2006.01)   *C22C 38/52* (2006.01)
*C22C 38/46* (2006.01)   *C22C 38/54* (2006.01)

(86) International application number:
**PCT/JP2016/070042**

(87) International publication number:
**WO 2017/056619 (06.04.2017 Gazette 2017/14)**

(54) **AUSTENITIC STAINLESS STEEL AND METHOD FOR PRODUCING AUSTENITIC STAINLESS STEEL**

AUSTENITISCHER EDELSTAHL UND VERFAHREN ZUR HERSTELLUNG VON AUSTENITISCHEM EDELSTAHL

ACIER INOXYDABLE AUSTÉNITIQUE ET SON PROCÉDÉ DE PRODUCTION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.09.2015 JP 2015192676**

(43) Date of publication of application:
**08.08.2018 Bulletin 2018/32**

(73) Proprietor: **Nippon Steel Corporation**
**Tokyo 100-8071 (JP)**

(72) Inventors:
• **HIRATA, Hiroyuki**
**Tokyo 100-8071 (JP)**
• **JOTOKU, Kana**
**Tokyo 100-8071 (JP)**
• **OMURA, Tomohiko**
**Tokyo 100-8071 (JP)**
• **NAKAMURA, Jun**
**Tokyo 100-8071 (JP)**
• **TERUNUMA, Masaaki**
**Tokyo 100-8071 (JP)**

• **OSUKI, Takahiro**
**Tokyo 100-8071 (JP)**
• **UEYAMA, Masaki**
**Tokyo 100-8071 (JP)**

(74) Representative: **J A Kemp LLP**
**14 South Square**
**Gray's Inn**
**London WC1R 5JJ (GB)**

(56) References cited:
**EP-A1- 2 692 886**   **EP-A2- 1 577 414**
**WO-A1-2012/132992**   **WO-A1-2015/159554**
**JP-A- H0 711 389**   **JP-A- 2000 256 803**
**JP-A- 2014 047 420**   **JP-A- 2016 074 976**
**JP-B2- S5 952 230**

• **GOLESTANIPOUR M ET AL: "CHLORIDE STRESS CORROSION CRACKING OF UNS S20910 STAINLESS STEEL", MATERIALS PERFORMANCE, NACE INTERNATIONAL, HOUSTON, TX, US, vol. 46, no. 1, 1 January 2007 (2007-01-01), pages 58-60, XP001506238, ISSN: 0094-1492**

## Description

TECHNICAL FIELD

The present invention relates to an austenitic stainless steel and a method of manufacturing an austenitic stainless steel.

BACKGROUND ART

In recent years, research has been under progress for putting to practical use transportation equipment that use hydrogen, instead of fossil fuel, as driving energy. Such practical use requires the provision of a use environment in which hydrogen under high pressure can be stored and transported (hereinafter also referred to as hydrogen equipment). Hydrogen equipment may be, for example, high-pressure hydrogen-gas equipment or liquid-hydrogen equipment. Materials used in hydrogen equipment are required to have hydrogen embrittlement resistance.

WO 2004/083476 A1, WO 2004/083477 A1, WO 2004/110695 A1 and WO 2012/132992 A1 each disclose a high-strength austenitic stainless steel. According to these documents, Mn is increased to increase the solubility of N, and V and Nb are added to provide solute strengthening due to N and precipitation strengthening due to nitrides and cause grains to be finer due to their pinning effect, thereby increasing strength.

When an austenitic stainless steel is used as a structure, the steel is required to allow assembly by welding for cost reasons. JP Hei5(1993)-192785 A, JP 2010-227949 A and, again, WO 2004/110695 A1  each disclose a welded joint where Al, Ti and Nb serve as useful elements and post weld heat treatment is done to achieve a tensile strength above 800 MPa.

WO 2013/005570 A1 discloses a welded joint where the N content in the weld material, the shield gas used during the welding and the area of the molten pool are controlled to increase the N content in the weld metal, thereby providing high strength even without post weld heat treatment.

DISCLOSURE OF THE INVENTION

Materials used for structures are required to have various properties in addition to hydrogen embrittlement resistance and strength. For example, when such materials are used in piping, some structures may be cold bent or welded under various conditions. As such, to provide healthy structures, both sufficient ductility and good weldability are needed.

Employing techniques as described in the above-listed patent documents provides a high-strength base material or welded joint with improved hydrogen embrittlement resistance. Particularly, WO 2004/083476 A1 and WO 2004/083477 A1 each disclose a high-strength austenitic stainless steel with a ductility corresponding to a braking elongation above 30 %. However, if a high concentration of Nb is contained as an alloy element for the purpose of using its effects, weldability may decrease and, during the welding, cracks may develop in weld heat-affected zones.

WO 2012/132992 A1 discloses performing cold working after solution heat treatment and, then, performing heat treatment again to provide an austenitic stainless steel with a strength of 800 MPa or higher. However, when a material is to be used as a structure, it is difficult to perform cold working on all its parts. Thus, a material is preferred that can provide the required strength and other properties after the solution heat treatment after the hot working without any further treatment.

EP 1577 414 discloses a heat-resistant austenitic stainless steel having high-temperature strength and sag-resistance capable of resisting working temperatures of not less than 550 DEG C as well as being low in cost, and a production process thereof. The steel contains not more than 0.1wt% C, less than 1.0wt% Si, 1.0wt% to 10.0wt% Mn, not more than 0.03wt% P, not more than 0.01wt% S, 0.01wt% to 3.0wt% Cu, 7.0wt% to 15.0wt% Ni, 15.0wt% to 25.0wt% Cr, 0.5wt% to 5.0wt% Mo, not more than 0.03wt% Al, 0.4wt% to 0.8wt% N, and the remainder substantially consisting of Fe and unavoidable impurities.

MATERIALS PERFORMANCE, NACE INTERNATIONAL, HOUSTON, TX, US, Vol. 46, no. 1, 1 January 2007 (2007-01-01), pages 58-60 discloses a steel with the following chemical composition (wt%) C: 0.035; Si: 0.47; S: 0.01; P: 0.26; Mn: 3.69; Ni: 13.56; Cr: 20.45; Mo: 2.29; Cu: 0.46; Nb: 0.21; V: 0.22; Ti: 0.004; Sn: 0.006; Co: 0.04; Al: 0.022; Pb: 0.0002; W: 0.036; Ca: 0.0012; Zn: 0.033; and Fe: Bal.

An object of the present invention is to provide an austenitic stainless steel with improved strength, ductility and weldability.

An austenitic stainless steel according to an embodiment of the present invention has a chemical composition consisting of, in mass %: 0.005 to 0.07 % C; 0.1 to 1.2 % Si; 3.2 to 6.5 % Mn; 9 to 14 % Ni; a total of not less than 0.005 % and up to 2 % of at least one of Cu and Co; 19 to 24 % Cr; 1 to 4 % Mo; 0.05 to 0.38 % Nb; 0.15 to 0.45 % N; up to 0.05 % Al; up to 0.03 % P; up to 0.002 % S; up to 0.02 % O; 0 to 0.5 % V; 0 to 0.5 % Ti; 0 to 0.01 % B; 0 to 0.05 % Ca;

0 to 0.05 % Mg; 0 to 0.5 % REM; and the balance being Fe and impurities, where an amount of Nb analyzed as a residue after electrolytic extraction is 0.01 to 0.28 mass %.

The present invention provides an austenitic stainless steel with improved strength, ductility and weldability.

EMBODIMENTS FOR CARRYING OUT THE INVENTION

The present inventors investigated the strength and ductility of austenitic stainless steels produced by performing hot working and solution heat treatment on a raw material containing, in mass %: 0.005 to 0.07 % C; 0.1 to 1.2 % Si; 3.2 to 6.5 % Mn; 9 to 14 % Ni; a total of not less than 0.005 % and less than 3 % of at least one of Cu and Co; 19 to 24 % Cr; 1 to 4 % Mo; 0.05 to 0.38 % Nb; 0.15 to 0.50 % N; up to 0.05 % Al; and other elements, and obtained the following findings.

The strength and ductility of an austenitic stainless steel are related to the amount of Nb analyzed as residues after electrolytic extraction, that is, they are related to the amount of precipitates containing Nb. The precipitates containing Nb are Nb carbonitrides and Nb nitrides produced during the manufacture of the austenitic stainless steel.

To provide the required strength after the solution heat treatment after the hot working without any further treatment, the amount of Nb analyzed as residues after electrolytic extraction needs to be 0.005 mass % or more. On the other hand, if the amount of Nb analyzed as residues after electrolytic extraction exceeds 0.28 mass %, the ductility decreases.

Even in the case of a steel where the amount of Nb analyzed as residues after electrolytic extraction is 0.005 mass % or more and the required strength is provided, welding such a steel before using it may cause another problem: liquation cracks may develop in weld heat-affected zones adjacent to the fusion line. This is presumably because, when the amount of Nb analyzed as residues after electrolytic extraction is small, the effects of the pinning due to carbonitrides or nitrides of Nb are insufficient and thus, during welding, grains become coarse. To prevent liquation cracking during welding, the amount of Nb analyzed as residues after electrolytic extraction needs to be 0.01 mass % or more.

Accordingly, to provide good strength, ductility and weldability in an austenitic stainless steel having the above-indicated chemical composition, it is required that the amount of Nb analyzed as residues after electrolytic extraction be 0.01 to 0.28 mass %.

Furthermore, the present inventors found that even better ductility and weldability may be provided by adjusting the conditions of the solution heat treatment performed after hot working depending on the Nb content in the raw material. More specifically, they found that good ductility and weldability may be provided by performing solution heat treatment at a solution heat treatment temperature in the range of 950 to 1300 °C under a condition that satisfies the following formula, (1):

$$40 \times [\%Nb] + 100 \leq T \times \log(1.2 + t/60) \leq -200 \times [\%Nb] + 700 \quad (1)$$

In formula (1), the Nb content in the raw material in mass % is substituted for [%Nb], the solution heat treatment temperature in °C is substituted for T, and the solution heat treatment time in minutes is substituted for t.

The present invention was made based on the above-discussed findings. An austenitic stainless steel according to an embodiment of the present invention and a method of manufacturing it will be described in detail below.

[Chemical Composition]

The austenitic stainless steel according to the present embodiment has the chemical composition described below. In the following description, "%" in the content of an element means mass percent.

C: 0.005 to 0.07 %

Carbon (C) is an element effective in stabilizing austenite. Further, C produces carbides of Nb and contributes to providing sufficient strength. The C content needs to be 0.005 % or higher in order that these effects are sufficiently present. However, if the C content is too high, excessive amounts of Nb carbides are produced, which decreases the ductility of the steel. In view of this, the C content should be in the range of 0.005 to 0.07 %. The lower limit of C content is preferably 0.01 %, and more preferably 0.02 %. The upper limit of C content is preferably 0.06 %, and more preferably 0.05 %.

Si: from 0.1 and up to 1.2 %

Silicon (Si) is an element effective as a deoxidizer and also effective in improving corrosion resistance. The Si content needs to be 0.1 % or higher in order that these effects are sufficiently present. However, if the Si content is too high, this reduces the stability of the austenite microstructure and also reduces the ductility of the steel. In view of this, the Si content should be in the range of 0.1 to 1.2 %. The lower limit of Si content is preferably 0.15 %, and more preferably 0.2 %. The upper limit of Si content is preferably 1.1 %, and more preferably 1.0 %.

Mn: 3.2 to 6.5 %

Manganese (Mn) contributes to deoxidization during manufacture and is also effective in stabilizing austenite. Mn further increases the solubility of N to indirectly contribute to increasing strength. The Mn content needs to be 3.2 % or higher in order that these effects are sufficiently present. On the other hand, if the Mn content is too high, not only is the steel saturated in terms of these effects, but also Mn becomes fumes during welding which stick to the weld, which decreases corrosion resistance. In view of this, the Mn content should be in the range of 3.2 to 6.5 %. The lower limit of the Mn content is preferably 3.4 %, and more preferably 3.5 %. The upper limit of Mn content is preferably 6.3 %, and more preferably 6.0 %.

Ni: 9 to 14 %

Nickel (Ni) is indispensable for providing stable austenite, and increases stacking fault energy and reduces embrittlement susceptibility in a hydrogen environment. The Ni content needs to be 9 % or higher in order that these effects are sufficiently present. However, Ni is an expensive element, and high Ni contents mean increased costs. In view of this, the Ni content should be in the range of 9 to 14 %. The lower limit of Ni content is preferably 9.5 %, and more preferably 10 %. The upper limit of Ni content is preferably 13.5 %, and more preferably 13 %.

Total of at least one of Cu and Co: not less than 0.005 % and up to 2 %

Similar to Ni, Cu (copper) and Co (cobalt) are effective in providing stable austenite microstructure. The total content of Cu and Co needs to be 0.005 % or more in order that their effects are sufficiently present. Only one of Cu and Co may be contained, or both may be contained. However, Cu and Co are expensive elements, and higher contents mean increased costs. Further, excess contents of Cu and Co lead to decreased ductility of the steel. In view of this, the total content of Cu and Co should be not lower than 0.005 % and lower than 2 %. The lower limit of the total content of Cu and Co is preferably 0.01 %, and more preferably 0.02 %. The upper limit of the total content of Cu and Co is preferably 1 %.

Cr: 19 to 24 %

Chromium (Cr) is indispensable for providing sufficient corrosion resistance in a use environment. Cr further increases the solubility of N during the manufacture of the base material to indirectly contribute to increasing strength. The Cr content needs to be 19 % or higher in order that these effects are sufficiently present. However, if the Cr content is too high, the austenite microstructure becomes instable. In view of this, the Cr content should be in the range of 19 to 24 %. The lower limit of Cr content is preferably 19.5 %, and more preferably 20 %. The upper limit of Cr content is preferably 23.5 %, and more preferably 23 %.

Mo: 1 to 4 %

Molybdenum (Mo) is an element effective in improving corrosion resistance in a use environment and increasing strength. The Mo content needs to be 1 % or higher in order that these effects are sufficiently present. However, Mo is an expensive element, and high Mo contents mean increased costs. Further, if the Mo content is too high, the austenite microstructure becomes instable. In view of this, the Mo content should be in the range of 1 to 4 %. The lower limit of Mo content is preferably 1.2 %, and more preferably 1.5 %. The lower limit of Mo content is preferably 3.8 %, and more preferably 3.5 %.

Nb: 0.05 to 0.38 %

Niobium (Nb) precipitates in the form of fine carbonitrides and nitrides in the matrix and is effective in improving strength. Further, fine carbonitrides and nitrides that have precipitated prevent coarsening of grains in heat-affected zones during welding, thereby reducing liquation cracking susceptibility. The Nb content needs to be 0.05 % or higher in order that these effects are sufficiently present. However, if the Nb content is too high, cracking susceptibility in weld heat-affected zones becomes high and, also, large amounts of carbonitrides and nitrides precipitate, which decreases the ductility of the material. In view of this, the Nb content should be in the range of 0.05 to 0.38 %. The lower limit of Nb content is preferably 0.12 %, and more preferably 0.15 %. The upper limit of Nb content is preferably 0.35 %.

Nb content as used herein means the total amount of Nb contained in the austenitic stainless steel. That is, it means the sum of the amount of Nb dissolved in the matrix and the amount of Nb that is present in the form of precipitates. In the present embodiment, in addition to Nb content, the amount of Nb that is present in the form of precipitates, i.e. the amount of Nb analyzed as residues after electrolytic extraction needs to be in the specified range.

N: 0.15 to 0.45 %

Nitrogen (N) dissolves in the matrix, and, together with Nb and other elements, forms fine carbonitrides and nitrides to contribute to increasing strength. Further, N is an element effective in stabilizing the austenite microstructure. The N content needs to be 0.15 % or higher in order that these effects are sufficiently present. However, if the N content is too high, hot workability during manufacturing decreases, and excess amounts of Nb precipitates are produced, which decreases the ductility of the steel. In view of this, the N content should be in the range of 0.15 to 0.50 %. The lower limit of N content is preferably 0.22 %, and more preferably 0.25 %. The upper limit of N content is 0.45 %.

Al: up to 0.05 %

Similar to Si, Al (aluminum) is contained as a deoxidizer. However, if the Al content is too high, the cleanliness of the steel deteriorates and hot workability decreases. In view of this, the Al content should be not higher than 0.05 %. The Al content is preferably not higher than 0.04 %, and more preferably not higher than 0.03 %. Although no lower limit of Al content needs to be provided, excessive reduction leads to increased steel-making costs. In view of this, the lower limit of Al content is preferably 0.0005 %, and more preferably 0.001 %.

The balance of the chemical composition of the austenitic stainless steel according to the present embodiment is Fe and impurities. Impurity as used herein means an element originating from ore or scrap used as raw material for stainless steel or an element that has entered from the environment or the like during the manufacturing process.

The contents of P, S and O, which are impurities, are limited to the ranges provided below.

P: not higher than 0.03 %

Phosphorus (P) is contained as an impurity in steel. If the P content is too high, hot workability during manufacturing decreases, and the liquation cracking susceptibility in weld heat-affected zones during welding increases. The lower the P content, the better; however, excessive reduction leads to increased manufacture costs. In view of this, the P content should be not higher than 0.03 %. The P content is preferably not higher than 0.025 %, and more preferably not higher than 0.02 %.

S: up to 0.002 %

Sulfur (S) is contained as an impurity in steel. If the S content is too high, hot workability during manufacturing decreases, and the ductility of the steel decreases. Further, if the S content is too high, the liquation cracking susceptibility in weld heat-affected zones during welding increases. The lower the S content, the better; however, excessive reduction leads to increased manufacture costs. In view of this, the S content should be not higher than 0.002 %. The S content is preferably not higher than 0.0018 %, and more preferably not higher than 0.0015 %.

O: up to 0.02 %

Oxygen (O) is contained as an impurity in steel. If the O content is too high, hot workability during manufacturing decreases, and the cleanliness of the steel deteriorates and ductility decreases. In view of this, the O content should be not higher than 0.02 %. The O content is preferably not higher than 0.015 %, and more preferably not higher than 0.01 %. Although no lower limit of O content needs to be provided, excessive reduction leads to increased steel-making costs. In view of this, the lower limit of O content is preferably 0.001 %, and more preferably 0.002 %.

In the chemical composition of the austenitic stainless steel according to the present embodiment, some of the Fe may be replaced by one or more elements selected from V, Ti, B, Ca, Mg and REM. V, Ti, B, Ca, Mg and REM are optional elements. That is, the chemical composition of the austenitic stainless steel according to the present embodiment may contain only some or none of V, Ti, B, Ca, Mg and REM.

V: 0 to 0.5 %

Similar to Nb, vanadium (V) precipitates in the form of carbonitrides and increases the strength of the steel. This effect is present if a small amount of V is contained. On the other hand, if the V content is too high, excessive amounts of carbonitrides precipitate, which decreases the ductility of the steel. In view of this, the V content should be in the range of 0 to 0.5 %. The lower limit of V content is preferably 0.001 %, and more preferably 0.005 %, and still more preferably 0.01 %. The upper limit of V content is preferably 0.45 %, and more preferably 0.40 %.

Ti: 0 to 0.5 %

Similar to V and Nb, titanium (Ti) precipitates in the form of carbonitrides and increases the strength of the steel. This effect is present if a small amount of Ti is contained. On the other hand, if the Ti content is too high, excessive amounts of carbonitrides precipitate, which decreases the ductility of the steel. In view of this, the Ti content should be in the range of 0 to 0.5 %. The lower limit of Ti content is preferably 0.001 %, and more preferably 0.003 %, and still more preferably 0.005 %. The upper limit of Ti content is preferably 0.45 %, and more preferably 0.40 %.

B: 0 to 0.01 %

Boron (B) segregates along grain boundaries and increases the fixing force at grain boundaries to contribute to increasing strength, and also improves ductility. B also reduces embrittlement in a hydrogen environment. These effects are present if a small amount of B is contained. On the other hand, if the B content is too high, the liquation cracking susceptibility in weld heat-affected zones increases. In view of this, the B content should be in the range of 0 to 0.01 %. The lower limit of B content is preferably 0.0001 %, and more preferably 0.0002 %, and still more preferably 0.0005 %. The upper limit of B content is preferably 0.008 %, and more preferably 0.005 %.

Ca: 0 to 0.05 %

Calcium (Ca) improves the hot workability of steel. This effect is present if a small amount of Ca is contained. On the other hand, if the Ca content is too high, Ca combines with O such that the cleanliness of the steel deteriorates and the hot workability decreases. In view of this, the Ca content should be in the range of 0 to 0.05 %. The lower limit of Ca content is preferably 0.0001 %, and more preferably 0.0005 %, and still more preferably 0.001 %. The upper limit of Ca content is preferably 0.03 %, and more preferably 0.01 %.

Mg: 0 to 0.05 %

Similar to Ca, magnesium (Mg) improves the hot workability of steel. This effect is present if a small amount of Mg is contained. On the other hand, if the Mg content is too high, Mg combines with O such that the cleanliness of the steel deteriorates and the hot workability decreases. In view of this, the Mg content should be in the range of 0 to 0.05 %. The lower limit of Mg content is preferably 0.0001 %, and more preferably 0.0005 %, and still more preferably 0.001 %. The upper limit of Mg content is preferably 0.03 %, and more preferably 0.01 %.

REM: 0 to 0.5 %

Rare-earth metals (REMs) have a strong affinity with S and improves the hot workability of steel. This effect is present if a small amount of REM is contained. On the other hand, if the REM content is too high, REM combines with O such that the cleanliness of the steel deteriorates and the hot workability decreases. In view of this, the REM content should be in the range of 0 to 0.5 %. The lower limit of REM content is preferably 0.001 %, and more preferably 0.002 %, and still more preferably 0.005 %. The upper limit of REM content is preferably 0.3 %, and more preferably 0.1 %.

"REM" is a collective term for the total of 17 elements: Sc, Y and the lanthanoids, and REM content refers to the total content of one or more REM elements. REM is typically contained in misch metal. Thus, for example, misch metal may be added to an alloy to adjust the REM content to be in the above-provided range.

[Amount of Nb Analyzed as Residues after Electrolytic Extraction]

In the austenitic stainless steel according to the present embodiment, the amount of Nb analyzed as residues after electrolytic extraction is in the range of 0.01 to 0.28 mass %.

Nb contained in the raw material precipitates in the form of fine carbonitrides and nitrides during the process of solution heat treatment. Fine carbonitrides and/or nitrides of Nb that have precipitated improve the strength of the steel, and, during welding, contributes to preventing coarsening of grains in weld heat-affected zones to reduce liquation cracking susceptibility. To produce these effects, the amount of Nb that has precipitated in the form of carbonitrides and/or nitrides, i.e. the amount of Nb analyzed as residues after electrolytic extraction needs to be 0.01 mass % or higher. However, if the amount of Nb analyzed as residues after electrolytic extraction is in excess, the ductility of the steel decreases. In view of this, the amount of Nb analyzed as residues after electrolytic extraction should be in the range of 0.01 to 0.28 mass %. The lower limit of the amount of Nb analyzed as residues after electrolytic extraction is preferably 0.02 mass %, and more preferably 0.03 mass %. The upper limit of the amount of Nb analyzed as residues after electrolytic extraction is preferably 0.25 mass %.

The amount of Nb analyzed as residues after electrolytic extraction may be adjusted by adjusting the Nb content and N content in the raw material as well as the conditions of the solution heat treatment. More specifically, the higher the Nb and N contents in the raw material, the higher the amount of Nb analyzed as residues after electrolytic extraction. The lower the temperature for the solution heat treatment and/or the longer the hold time, the higher the amount of Nb analyzed as residues after electrolytic extraction. However, if the temperature for solution heat treatment is low and/or the hold time is short, the amounts of carbonitrides and/or nitrides of Nb that have been produced in the steps preceding the solution heat treatment, such as hot working, and the solution heat treatment itself, and that dissolve during the solution heat treatment are not sufficient, in which case, too, the amount of Nb analyzed as residues after electrolytic extraction is high. Further, during the cooling in the solution heat treatment, the lower the cooling rate in the temperature range of 1100 to 600 °C, where carbonitrides and/or nitrides of Nb precipitate, the higher the amount of Nb analyzed as residues after electrolytic extraction.

The amount of Nb analyzed as residues after electrolytic extraction is measured in the following manner.

From an austenitic stainless steel, a test material with a predetermined size is obtained. With constant-current electrolysis using, as the electrolyte, 10 volume % acetylacetone-1 mass % tetramethyl ammonium chloride methanol solution, the test material is subjected to anodic dissolution at a current density of 20 to 25 mA/cm$^2$, and carbonitrides and nitrides in the residue are extracted. The extracted residue is subjected to acid decomposition and then ICP (high-frequency inductively coupled plasma) emission analysis is performed to measure the mass of Nb in the residue. The mass of Nb in the residue is divided by the amount of dissolution of the test material to determine the amount of Nb present in the form of carbonitrides and/or nitrides, that is, the amount of Nb analyzed as residues after electrolytic extraction.

[Manufacturing Method]

A method of manufacturing an austenitic stainless steel according to an embodiment of the present invention will be described below. The method for the austenitic stainless steel according to the present embodiment includes the steps of: preparing a raw material; hot working the raw material; and performing solution heat treatment on the hot-worked raw material.

First, a raw material with the above-listed chemical composition is prepared. More specifically, for example, a steel with the above-listed chemical composition is smelted and refined.

The raw material is hot worked. The hot working may be, for example, hot rolling or hot forging.

The hot-worked raw material is subjected to solution heat treatment. More specifically, the raw material is held at a predetermined solution heat treatment temperature for a predetermined solution heat treatment time before being cooled. Thus, coarse carbonitrides and/or nitrides of Nb that have precipitated during the hot working and other steps are dissolved, and, during the process of cooling, are precipitated again in the form of fine carbonitrides and/or nitrides. The fine carbonitrides and/or nitrides of Nb that have precipitated contribute to improving the strength and ductility of the steel.

The solution heat treatment temperature is preferably in the range of 950 to 1300 °C. If the solution heat treatment temperature is lower than 950 °C, the amounts of carbonitrides and/or nitrides of Nb that have precipitated during the hot working and that dissolve during the solution heat treatment are not sufficient and the amount of Nb analyzed as residues after electrolytic extraction may not be 0.3 mass % or lower. On the other hand, if the solution heat treatment temperature exceeds 1300 °C, grains become coarse and some grain boundaries may begin to melt.

The cooling for the solution heat treatment is preferably water cooling. In the cooling after the solution heat treatment, the lower the cooling rate in the temperature range of 1100 to 600 °C in which carbonitrides and/or nitrides of Nb precipitate, the larger the amount of Nb analyzed as residues after electrolytic extraction becomes. The cooling rate in this temperature range is not lower than 0.5 °C/sec., and preferably not lower than 1 °C/sec.

The solution heat treatment is preferably performed under a condition that satisfies the following formula, (1).

$$40\times[\%Nb]+100\leq T\times\log(1.2+t/60)\leq-200\times[\%Nb]+700 \quad (1)$$

In formula (1), the Nb content in the raw material in mass % is substituted for [%Nb], the solution heat treatment temperature in °C is substituted for T, and the solution heat treatment time in minutes is substituted for t. log (x) is the common logarithm of x.

If T×log(1.2+t/60) is smaller than 40x[%Nb]+100, the amounts of coarse carbonitrides and/or nitrides of Nb that dissolve are not sufficient such that the amounts of fine carbonitrides and/or nitrides that precipitate in the process including the cooling are not sufficient. This decreases the improvement in strength and ductility. This is because the higher the Nb content in the raw material, the higher the temperature and/or the longer the time required to dissolve coarse carbonitrides and/or nitrides of Nb. Thus, it is preferable that the higher the Nb content in the raw material, the larger the value of T×log(1.2+t/60).

On the other hand, if T×log(1.2+t/60) exceeds -200×[%Nb]+700, grains significantly coarsen, which increases the liquation cracking susceptibility during welding. Since Nb is an element that increases liquation cracking susceptibility, it is preferable that the higher the Nb content in the raw material, the smaller the value of T×log(1.2+t/60).

In the method of manufacturing an austenitic stainless steel according to the present embodiment, it is preferable that cold working is not performed between the hot working and the solution heat treatment. This is because performing cold working would cause distortion-induced precipitates to be produced during the temperature increase of the solution heat treatment, which would require a higher temperature or a longer time for the solution heat treatment.

An embodiment of the present invention has been described. The present embodiment provides an austenitic stainless steel with improved strength, ductility and weldability.

The above-described embodiments are merely examples for carrying out the present invention. Thus, the present invention is not limited to the above-described embodiments, and the above-described embodiments may be modified as appropriate without departing from the present invention as defined in the claims.

EXAMPLES

The present invention will now be described more specifically with the help of examples. The present invention is not limited to these examples.

Raw materials for Steel Types A and C to F having the chemical compositions shown in Table 1 were melted in a laboratory and cast into ingots, which were subjected to hot forging and hot rolling to produce plates with a plate thickness of 14 mm. Thereafter, solution heat treatment was performed with varied temperatures and times. The cooling after the solution heat treatment was water cooling. The plates that have been subjectect to the solution heat treatement were machined into a place thickness of 12 mm to provide samples. "-" in Table 1 means that the content of the relevant element was at an impurity level.

[Table 1]

TABLE 1

| Steel type | Chemical composition (in mass %, balance Fe and impurities) | | | | | | | | | | | | | | | Cu+Co |
| --- | --- | --- | --- | --- | --- | --- | --- | --- | --- | --- | --- | --- | --- | --- | --- | --- |
| | C | Si | Mn | P | S | Ni | Cu | Co | Cr | Mo | Nb | Al | N | O | other | |
| A | 0.03 | 0.30 | 4.55 | 0.017 | 0.0010 | 12.43 | 0.06 | - | 21.65 | 2.11 | 0.20 | 0.009 | 0.33 | 0.002 | | 0.06 |
| C | 0.03 | 0.42 | 5.05 | 0.015 | 0.0008 | 11.95 | 0.51 | 0.49 | 21.10 | 2.14 | 0.07 | 0.008 | 0.42 | 0.005 | Ti: 0.004, Mg: 0.001, REM: 0.002 | 1.00 |
| D | 0.03 | 0.32 | 5.65 | 0.025 | 0.0018 | 13.26 | 0.05 | 0.06 | 20.42 | 1.85 | 0.42* | 0.010 | 0.28 | 0.006 | Ca: 0.003 | 0.11 |
| E | 0.04 | 0.48 | 6.20 | 0.002 | 0.0019 | 11.95 | 1.48 | 1.96 | 22.24 | 1.98 | 0.22 | 0.018 | 0.44 | 0.006 | Ti: 0.34 | 3.44* |
| F | 0.02 | 0.28 | 3.85 | 0.015 | 0.0012 | 12.01 | 0.03 | - | 20.58 | 1.96 | -* | 0.010 | 0.19 | 0.003 | | 0.03 |
| * indicates that the relevant value is outside the range specified by the present invention. | | | | | | | | | | | | | | | | |

[Residue Analysis]

From the samples were obtained test materials with a width and height of 10 mm and a length of 50 mm, and the amount of Nb analyzed as residues after electrolytic extraction was measured by the method described in connection with the above-described embodiment.

[Tensile Test]

From the samples were obtained No. 14A round-bar test pieces indicated in JIS Z2201 (2013) with a parallel-portion diameter of 8 mm and a parallel-portion length of 55 mm, and tensile testing was conducted at room temperature. A test piece with a tensile strength of 690 MPa or higher, which is required from hydrogen equipment, was determined to have passed the test. A test piece with a tensile strength of 800 MPa or higher was determined to have a particularly good tensile strength. Regarding ductility, a test piece with a breaking elongation of 35 % or higher during the tensile testing was determined to have passed the test. A test piece with a breaking elongation of 40 % or higher was determined to have a particularly good ductility.

[Low-strain-rate tensile test]

Low-strain-rate tensile testing was conducted on the samples that have passed the tensile test, in order to evaluate the hydrogen embrittlement resistance in a high-pressure hydrogen environment. More specifically, plate-shaped low-strain-rate tensile test pieces were obtained from the samples, and low-strain-rate tensile testing was conducted in the atmosphere and in a high-pressure hydrogen environment at 45 MPa. The strain rate was $3 \times 10^{-5}$/sec. A test piece in which the value of the reduction of area due to the break test in the high-pressure hydrogen environment was 90 % or more of the value of the reduction of area due to the break test in the atmosphere was determined to have passed the test.

[Weld Test]

A test for evaluating weldability was conducted on the samples that have passed the tensile test and the low-strain-rate tensile test. More specifically, steel plates with a width of 50 mm and a length of 100 mm were prepared and, in a cross section along the longitudinal direction of each plate, a V groove was formed with an edge angle of 30 ° and a root thickness of 1 mm. The four sides of each of these steel plates were restraint-welded on an SM400B steel plate specified by JIS G 3106 (2008) with a thickness of 25 mm, a width of 200 mm and a length of 200 mm, using a covered arc-welding rod Eni6625 specified by JIS Z 3224 (2010). Thereafter, a filler wire corresponding to SNi 6082 specified in JIS Z 3334 (2011) was used to perform laminated welding in the groove at a heat input of 10 to 15 kJ/cm to produce a welded joint.
Specimens were obtained from five locations in each produced welded joint, where the observed surface was represented by a transverse surface of the joint (i.e. cross section perpendicular to the weld bead). Each of the obtained specimens were polished and etched before being observed by optical microscopy to determine whether cracks were present in the weld heat-affected zones. A joint in which the five specimens included one or fewer specimens with cracks found was determined to have passed the test. A joint in which no cracks were found in any of the specimens was determined to have particularly good weldability.
The solution heat treatment conditions and the results of the tests are shown in Table 2.

[Table 2]

TABLE 2

| Mark | Steel type | Nb amount (mass %) | T (°C) | t (min.) | fn1 | fn2 | fn3 | Residue Nb amount (mass %) | Tensile test | | Low-strain-rate tensile test | Weld test |
|------|------------|--------------------|--------|----------|-----|-----|-----|----------------------------|--------------|--|------------------------------|-----------|
| | | | | | | | | | Tensile strength | Elongation | | |
| A1 | A | 0.20 | 950 | 60 | 108 | 325.3 | 660 | 0.12 | excellent | excellent | passed | excellent |
| A2 | A | 0.20 | 1050 | 3 | 108 | 101.8# | 660 | 0.14 | excellent | good | passed | excellent |
| A3 | A | 0.20 | 1050 | 5 | 108 | 113.8 | 660 | 0.12 | excellent | excellent | passed | excellent |
| A4 | A | 0.20 | 1050 | 10 | 108 | 142.4 | 660 | 0.11 | excellent | excellent | passed | excellent |
| A5 | A | 0.20 | 1050 | 60 | 108 | 359.5 | 660 | 0.10 | excellent | excellent | passed | excellent |
| A6 | A | 0.20 | 1050 | 90 | 108 | 452.9 | 660 | 0.08 | excellent | excellent | passed | excellent |
| A7 | A | 0.20 | 1050 | 120 | 108 | 530.4 | 660 | 0.11 | excellent | excellent | passed | excellent |
| A8 | A | 0.20 | 1050 | 180 | 108 | 654.4 | 660 | 0.14 | excellent | excellent | passed | excellent |
| A9 | A | 0.20 | 1050 | 210 | 108 | 705.7# | 660 | 0.16 | excellent | excellent | passed | good |
| A10 | A | 0.20 | 1220 | 1 | 108 | 103.9# | 660 | 0.10 | excellent | good | passed | excellent |
| A11 | A | 0.20 | 1220 | 3 | 108 | 118.2 | 660 | 0.08 | excellent | excellent | passed | excellent |
| A12 | A | 0.20 | 1220 | 5 | 108 | 132.2 | 660 | 0.07 | excellent | excellent | passed | excellent |
| A13 | A | 0.20 | 1220 | 10 | 108 | 165.5 | 660 | 0.07 | excellent | excellent | passed | excellent |
| A14 | A | 0.20 | 1220 | 60 | 108 | 417.8 | 660 | 0.06 | excellent | excellent | passed | excellent |
| A15 | A | 0.20 | 1220 | 90 | 108 | 526.3 | 660 | 0.06 | excellent | excellent | passed | excellent |
| A16 | A | 0.20 | 1220 | 120 | 108 | 616.3 | 660 | 0.07 | excellent | excellent | passed | excellent |
| A17 | A | 0.20 | 1220 | 180 | 108 | 760.4# | 660 | 0.10 | excellent | excellent | passed | good |
| A18 | A | 0.20 | 1250 | 60 | 108 | 428.0 | 660 | 0.05 | excellent | excellent | passed | excellent |
| A19 | A | 0.20 | 1300 | 60 | 108 | 445.1 | 660 | 0.04 | excellent | excellent | passed | excellent |
| C1 | C | 0.07 | 950 | 60 | 102.8 | 325.3 | 686 | 0.05 | excellent | excellent | passed | excellent |
| C2 | C | 0.07 | 1050 | 5 | 102.8 | 113.8 | 686 | 0.07 | excellent | excellent | passed | excellent |
| C3 | C | 0.07 | 1050 | 10 | 102.8 | 142.4 | 686 | 0.06 | excellent | excellent | passed | excellent |

EP 3 358 030 B1

11

(continued)

| Mark | Steel type | Nb amount (mass %) | T (°C) | t (min.) | fn1 | fn2 | fn3 | Residue Nb amount (mass %) | Tensile test | | Low-strain-rate tensile test | Weld test |
|------|------------|--------------------|--------|----------|------|------|-----|----------------------------|--------------|--|------------------------------|-----------|
| | | | | | | | | | Tensile strength | Elongation | | |
| C4 | C | 0.07 | 1050 | 60 | 102.8 | 359.5 | 686 | 0.02 | excellent | excellent | passed | excellent |
| C5 | C | 0.07 | 1050 | 120 | 102.8 | 530.4 | 686 | 0.04 | excellent | excellent | passed | excellent |
| C6 | C | 0.07 | 1050 | 180 | 102.8 | 654.4 | 686 | 0.06 | excellent | excellent | passed | excellent |
| C7 | C | 0.07 | 1050 | 210 | 102.8 | 705.7# | 686 | 0.06 | excellent | excellent | passed | good |
| C8 | C | 0.07 | 1220 | 5 | 102.8 | 132.2 | 686 | 0.06 | excellent | excellent | passed | excellent |
| C9 | C | 0.07 | 1220 | 10 | 102.8 | 165.5 | 686 | 0.04 | excellent | excellent | passed | excellent |
| C10 | C | 0.07 | 1220 | 60 | 102.8 | 417.8 | 686 | 0.01 | excellent | excellent | passed | excellent |
| C11 | C | 0.07 | 1220 | 120 | 102.8 | 616.3 | 686 | 0.04 | excellent | excellent | passed | excellent |
| C12 | C | 0.07 | 1220 | 180 | 102.8 | 760.4# | 686 | 0.04 | excellent | excellent | passed | good |
| C13 | C | 0.07 | 1350 | 60 | 102.8 | 462.3 | 686 | 0.004* | unacceptabl e | excellent | - | - |
| D1 | D* | 0.42* | 1050 | 10 | 116.8 | 142.4 | 616 | 0.28 | excellent | excellent | passed | unacceptabl e |
| D2 | D* | 0.42* | 1220 | 10 | 116.8 | 165.5 | 616 | 0.18 | excellent | excellent | passed | unacceptabl e |
| E1 | E* | 0.22 | 1050 | 10 | 108.8 | 142.4 | 656 | 0.18 | excellent | unacceptabl e | - | - |
| E2 | E* | 0.22 | 1220 | 10 | 108.8 | 165.5 | 656 | 0.11 | excellent | unacceptabl e | - | - |
| F1 | F* | -* | 1050 | 10 | 100.0 | 142.4 | 700 | <0.001 | unacceptabl e | excellent | - | - |
| F2 | F* | -* | 1220 | 10 | 100.0 | 165.5 | 700 | <0.001 | unacceptabl e | excellent | - | - |

fn1=40×[%Nb]+100, fn2=T×log(1.2+t/60), fn3=-200×[%Nb]+700 * indicates that the relevant value is outside the range specified by the present invention.

# indicates that the relevant value is outside the preferred range of the present invention.

In Table 2, "Nb amount (mass %)" indicates the Nb content in the raw material. "T (°C)" and "t (min.)" indicate solution heat treatment temperature and solution-temperature time, respectively. fn1, fn2 and fn3 indicate the left side, middle side and right side, respectively, of formula (1). "Residue Nb amount (mass %)" indicates the amount of Nb analyzed as residues after electrolytic extraction.

The columns labeled "Tensile test" list the results of tensile testing. In the column labeled "Tensile strength", "excellent" means that the tensile strength of the relevant sample was not lower than 800 MPa, while "unacceptable" means that the value was lower than 690 MPa. In the column labeled "Elongation", "excellent" means that the breaking elongation of the relevant sample was not less than 40 %, "good" means that the value was not less than 35 % and less than 40 %, and "unacceptable" means that the value was less than 35 %.

The column labeled "Low-strain-rate tensile test" lists the results of the low-strain-rate tensile testing. In this column, "passed" means that, in the sample, the reduction of area due to the break test in the high-pressure hydrogen environment was 90 % or more of the reduction of area due to the break test in the atmosphere.

The column labeled "Weld test" lists the results of the weld testing. In this column, "excellent" means that no cracks were found in any of the five specimens, "good" means that cracks were found in only one of the specimens, and "unacceptable" means that cracks were found in two or more of the specimens.

"-" in the columns with "Low-strain-rate tensile test" and "Weld test" means that the relevant test was not conducted.

As shown in Table 2, the samples with Marks A1 to A19, and C1 to C12 passed all of the tensile test, low-strain-rate tensile test and weld test. Particularly, the samples with Marks A1, A3 to A8, A11 to A16, A18, A19, C1 to C6 and C8 to C11 had excellent results in both the tensile and weld tests. More specifically, in each sample, the tensile strength was not lower than 800 MPa, the breaking elongation was not less than 40 %, and no cracks were found in any of the five specimens.

The samples with Marks A2 and A10 each had a breaking elongation not less than 35 % and less than 40 % and a ductility slightly inferior to Mark A1, for example. This is presumably because the value of $T \times \log(1.2+t/60)$ was too low relative to the Nb content in the raw material and the amounts of coarse carbonitrides and/or nitrides of Nb that dissolve were not sufficient.

In each of the samples with Marks A9, A17, C7 and C12, cracks were found in only one of the five specimens, which means a weldability slightly inferior to Mark A, for example. This is presumably because the value of $T \times \log(1.2+t/60)$ was too high relative to the Nb content and the increased grain size led to increased liquation cracking susceptibility.

Mark C13 had a tensile strength lower than 690 MPa. This is presumably because the amount of Nb analyzed as residues after electrolytic extraction was too low. The amount of Nb analyzed as residues after electrolytic extraction was too low presumably because the temperature for the solution heat treatment was high, which means that the temperature at which the cooling started was also high such that the rate of cooling during the passage through the temperature range in which precipitates were produced was too high, preventing the production of precipitates.

In each of Marks D1 and D2, the tensile strength and ductility were sufficient but cracks were found in two or more of the five specimens. This is presumably because the Nb content in Steel Type D was too high, which increased liquation cracking susceptibility.

In each of Marks E1 and E2, the tensile strength was sufficient but the breaking elongation was less than 35 %. This is presumably because the total content of Cu and Co of Steel Type E was too high.

Marks F1 and F2 contained no Nb and thus each had a tensile strength lower than 690 MPa.

This shows that the present invention provides an austenitic stainless steel with improved strength, ductility and weldability.

INDUSTRIAL APPLICABILITY

The present invention provides an austenitic stainless steel with improved strength, ductility and weldability. Thus, the present invention can be suitably used in various steels in high-pressure hydrogen-gas equipment or liquid-hydrogen storage tanks.

**Claims**

1. An austenitic stainless steel having a chemical composition comprising, in mass %:

    0.005 to 0.07 % C;
    0.1 to 1.2 % Si;
    3.2 to 6.5 % Mn;
    9 to 14 % Ni;

a total of not less than 0.005 % and up to 2 % of at least one of Cu and Co;
19 to 24 % Cr;
1 to 4 % Mo;
0.05 to 0.38 % Nb;
0.15 to 0.45 %N;
up to 0.05 % Al;
up to 0.03 % P;
up to 0.002 % S;
up to 0.02 % O;
0 to 0.5 % V;
0 to 0.5 % Ti;
0 to 0.01 % B;
0 to 0.05 % Ca;
0 to 0.05 % Mg;
0 to 0.5 % REM; and
the balance being Fe and impurities,

where an amount of Nb analyzed as a residue after electrolytic extraction is 0.01 to 0.28 mass %,
wherein the amount of Nb analyzed as a residue after electrolytic extraction is measured by:

obtaining a test material from the austenitic stainless steel;
subjecting the test material to anodic dissolution at a current density of 20 to 25 mA/cm$^2$ with constant-current electrolysis using, as the electrolyte, 10 volume % acetylacetone-1 mass % tetramethyl ammonium chloride methanol solution to extract the residue comprising carbonitrides and nitrides;
subjecting the extracted residue to acid decomposition and performing high-frequency inductively coupled plasma emission analysis to measure the mass of Nb in the residue; and
dividing the mass of Nb in the residue by an amount of dissolution of the test material.

2. The austenitic stainless steel according to claim 1, wherein the chemical composition includes one or more elements selected from the group consisting of, in mass %:

0.001 to 0.5 % V;
0.001 to 0.5 % Ti;
0.0001 to 0.01 % B;
0.0001 to 0.05 % Ca;
0.0001 to 0.05 % Mg; and
0.001 to 0.5 % REM.

3. The austenitic stainless steel according to claim 1 or 2, wherein the austenitic stainless steel has a tensile strength not lower than 690 MPa and a breaking elongation not less than 35 % at room temperature, and
the tensile strength and the breaking elongation are obtained by tensile testing with No. 14A round-bar test pieces indicated in JIS Z2201 (2013) with a parallel-portion diameter of 8 mm and a parallel-portion length of 55 mm.

4. The austenitic stainless steel according to any one of claims 1 to 3, wherein the austenitic stainless steel is used in high-pressure hydrogen-gas equipment or in liquid-hydrogen equipment.

5. A method of manufacturing the austenitic stainless steel according to any one of claims 1 to 4, comprising the steps of:

preparing a raw material having a chemical composition comprising, in mass %: 0.005 to 0.07 % C; 0.1 to 1.2 % Si; 3.2 to 6.5 % Mn; 9 to 14 % Ni; a total of not less than 0.005 % and up to 2 % of at least one of Cu and Co; 19 to 24 % Cr; 1 to 4 % Mo; 0.05 to 0.38 % Nb; 0.15 to 0.45 % N; up to 0.05 % Al; up to 0.03 % P; up to 0.002 % S; up to 0.02 % O; 0 to 0.5 % V; 0 to 0.5 % Ti; 0 to 0.01 % B; 0 to 0.05 % Ca; 0 to 0.05 % Mg; 0 to 0.5 % REM; and the balance being Fe and impurities;
performing hot working on the raw material; and
performing solution heat treatment on the raw material after the hot working at a solution heat treatment temperature of 950 to 1300 °C under a condition satisfying the formula provided below, (1),
wherein cold working is not performed between the hot working and the solution heat treatment, and
in a cooling for the solution treatment, a cooling rate in the temperature range of 1100 to 600 °C is not lower than 0.5 °C/sec.,

$$40\times[\%Nb]+100\leq T\times\log(1.2+t/60)\leq-200\times[\%Nb]+700 \quad (1),$$

In formula (1), the Nb content in the raw material in mass % is substituted for [%Nb], the solution heat treatment temperature in °C is substituted for T, and the solution heat treatment time in minutes is substituted for t.

**Patentansprüche**

1. Austenitischer rostfreier Stahl mit einer chemischen Zusammensetzung, die in Masse-% Folgendes umfasst:

   0,005 bis 0,07 % C;
   0,1 bis 1,2 % Si;
   3,2 bis 6,5 % Mn;
   9 bis 14 % Ni;
   insgesamt nicht weniger als 0,005 % und bis zu 2 % von mindestens einem von Cu und Co;
   19 bis 24 % Cr;
   1 bis 4 % Mo;
   0,05 bis 0,38 % Nb;
   0,15 bis 0,45 % N;
   bis zu 0,05 % Al;
   bis zu 0,03 % P;
   bis zu 0,002 % S;
   bis zu 0,02 % O;
   0 bis 0,5 % V;
   0 bis 0,5 % Ti;
   0 bis 0,01 % B;
   0 bis 0,05 % Ca;
   0 bis 0,05 % Mg;
   0 bis 0,5% REM; und
   wobei der Rest Fe und Verunreinigungen ist,

   wobei eine Menge an Nb, die nach der elektrolytischen Extraktion als Rest analysiert wird, 0,01 bis 0,28 Masse-% beträgt,
   wobei die Menge an Nb, die nach der elektrolytischen Extraktion als Rest analysiert wird, gemessen wird durch:

   Erhalten eines Testmaterials von dem austenitischen rostfreien Stahl;
   Aussetzen des Testmaterials einer anodischen Auflösung bei einer Stromdichte von 20 bis 25 mA/cm² mit Konstantstromelektrolyse unter Verwendung als Elektrolyt von 10 Volumen-% Acetylaceton- 1 Masse-% Tetramethylammoniumchloridmethanollösung, um den Rest, der Carbonitride und Nitride umfasst, zu extrahieren;
   Unterziehen des extrahierten Rests einer Säurezersetzung und
   Durchführen einer induktiv gekoppelten Hochfrequenz-Plasmaemissionsanalyse zur Messung der Masse von Nb im Rest; und
   Teilen der Masse von Nb im Rest durch eine Auflösungsmenge des Testmaterials.

2. Austenitischer rostfreier Stahl nach Anspruch 1, wobei die chemische Zusammensetzung ein oder mehrere Elemente umfasst, die ausgewählt sind aus der Gruppe bestehend aus (in Masse-%):

   0,001 bis 0,5 % V;
   0,001 bis 0,5 % Ti;
   0,0001 bis 0,01 % B;
   0,0001 bis 0,05 % Ca;
   0,0001 bis 0,05 % Mg; und
   0,001 bis 0,5 % REM.

3. Austenitischer rostfreier Stahl nach Anspruch 1 oder 2, wobei der austenitische rostfreie Stahl eine Zugfestigkeit von nicht weniger als 690 MPa und eine Bruchdehnung von nicht weniger als 35 % bei Raumtemperatur aufweist, und die Zugfestigkeit und die Bruchdehnung durch Zugprüfung mit Rundstab-Teststücken Nr. 14A angegeben in JIS Z2201 (2013) mit einem Parallelabschnittdurchmesser von 8 mm und einer Parallelabschnittlänge von 55 mm ermittelt werden.

4. Austenitischer rostfreier Stahl nach einem der Ansprüche 1 bis 3, wobei der austenitische rostfreie Stahl in Hochdruck-Wasserstoff-Gasausstattung oder in Flüssigwasserstoffausstattung verwendet wird.

5. Verfahren zur Herstellung des austenitischen rostfreien Stahls nach einem der Ansprüche 1 bis 4, umfassend die folgenden Schritte:

Herstellen eines Rohmaterials mit einer chemischen Zusammensetzung, die in Masse-% Folgendes umfasst: 0,005 bis 0,07 % C; 0,1 bis 1,2 % Si; 3,2 bis 6,5 % Mn; 9 bis 14 % Ni; insgesamt nicht weniger als 0,005 % und bis zu 2 % von mindestens einem von Cu und Co; 19 bis 24 % Cr; 1 bis 4 % Mo; 0,05 bis 0,38 % Nb; 0,15 bis 0,45 % N; bis zu 0,05 % Al; bis zu 0,03 % P; bis zu 0,002 % S; bis zu 0,02 % O; 0 bis 0,5 % V; 0 bis 0,5 % Ti; 0 bis 0,01 % B; 0 bis 0,05 % Ca; 0 bis 0,05 % Mg; 0 bis 0,5 % REM; und wobei der Rest Fe und Verunreinigungen ist;
Durchführen von Warmbearbeitung des Rohmaterials; und
Durchführen einer Lösungswärmebehandlung des Rohmaterials nach der Warmbearbeitung bei einer Lösungswärmebehandlungstemperatur von 950 bis 1300 °C unter einer Bedingung, die die nachstehende Formel erfüllt, (1),
wobei zwischen der Warmbearbeitung und der Lösungswärmebehandlung keine Kaltbearbeitung durchgeführt wird, und
bei einer Kühlung für die Lösungsbehandlung eine Abkühlrate im Temperaturbereich von 1100 bis 600 °C nicht unter 0,5 °C/Sek. liegt,

$$40 \times [\%Nb] + 100 \leq T \times \log(1{,}2 + t/60) \leq -200 \times [\%Nb] + 700 \qquad (1),$$

In der Formel (1) wird der Nb-Gehalt im Rohmaterial in Masse-% durch [%Nb] ersetzt, die Lösungswärmebehandlungstemperatur in °C wird durch T ersetzt und die Lösungswärmebehandlungszeit in Minuten wird durch t ersetzt.

**Revendications**

1. Acier inoxydable austénitique ayant une composition chimique comprenant, en % en masse :

de 0,005 à 0,07 % de C ;
de 0,1 à 1,2 % de Si;
de 3,2 à 6,5 % de Mn ;
de 9 à 14 % de Ni ;
un total non inférieur à 0,005 % et jusqu'à 2 % d'au moins un de Cu et de Co ;
de 19 à 24 % de Cr ;
d' 1 à 4 % de Mo ;
de 0,05 à 0,38 % de Nb ;
de 0,15 à 0,45 % de N;
jusqu'à 0,05 % d'Al ;
jusqu'à 0,03 % de P ;
jusqu'à 0,002 % de S ;
jusqu'à 0,02 % d'O ;
de 0 à 0,5 % de V ;
de 0 à 0,5 % de Ti ;
de 0 à 0,01 % de B ;
de 0 à 0,05 % de Ca ;
de 0 à 0,05 % de Mg ;

de 0 à 0,5 % de REM ; et
le reste étant Fe et des impuretés,

où une quantité de Nb analysée en tant que résidu après extraction électrolytique est de 0,01 à 0,28 % en masse, dans lequel la quantité de Nb analysée en tant que résidu après extraction électrolytique est mesurée par :

l'obtention d'un matériau d'essai à partir de l'acier inoxydable austénitique ;
la soumission du matériau d'essai à une dissolution anodique à une densité de courant de 20 à 25 mA/cm$^2$ avec électrolyse à courant constant en utilisant, en tant qu'électrolyte, une solution méthanolique à 10 % en volume d'acétylacétone-1 % en masse de chlorure d'ammonium tétraméthylique pour extraire le résidu comprenant des carbonitrures et des nitrures ;
la soumission du résidu extrait à une décomposition par acide, et
la réalisation d'analyse par émission plasma couplée par induction à haute fréquence pour mesurer la masse de Nb dans le résidu ; et
la division de la masse de Nb dans le résidu par une quantité de dissolution du matériau d'essai.

2. Acier inoxydable austénitique selon la revendication 1, dans lequel la composition chimique inclut un ou plusieurs éléments sélectionnés parmi le groupe constitué de, en % en masse :

0,001 à 0,5 % de V;
0,001 à 0,5 % de Ti ;
0,0001 à 0,01 % de B ;
0,0001 à 0,05 % de Ca ;
0,0001 à 0,05 % de Mg ; et
0,001 à 0,5 % de REM.

3. Acier inoxydable austénitique selon la revendication 1 ou 2, dans lequel l'acier inoxydable austénitique a une résistance à la traction non inférieure à 690 MPa et un allongement à la rupture non inférieur à 35 % à température ambiante, et
la résistance à la traction et l'allongement à la rupture sont obtenus par essais de traction avec des pièces d'essai en barre ronde n° 14A indiquées dans JIS Z2201 (2013) avec un diamètre de partie parallèle de 8 mm et une longueur de partie parallèle de 55 mm.

4. Acier inoxydable austénitique selon l'une quelconque des revendications 1 à 3, dans lequel l'acier inoxydable austénitique est utilisé dans un équipement à gaz hydrogène à haute pression ou dans un équipement à hydrogène liquide.

5. Procédé de fabrication de l'acier inoxydable austénitique selon l'une quelconque des revendications 1 à 4, comprenant les étapes de :

la préparation d'une matière première ayant une composition chimique comprenant, en % en masse : de 0,005 à 0,07 % de C ; de 0,1 à 1,2 % de Si ; de 3,2 à 6,5 % de Mn ; de 9 à 14% Ni ; un total non inférieur à 0,005 % et jusqu'à 2 % d'au moins un de Cu et de Co ; de 19 à 24 % de Cr ; d'1 à 4 % de Mo ; de 0,05 à 0,38 % de Nb ; de 0,15 à 0,45 % de N ; jusqu'à 0,05 % d'Al ; jusqu'à 0,03 % de P ; jusqu'à 0,002 % de S ; jusqu'à 0,02 % d'O ; de 0 à 0,5 % de V ; de 0 à 0,5 % de Ti ; de 0 à 0,01 % de B ; de 0 à 0,05 % de Ca ; de 0 à 0,05 % de Mg ; de 0 à 0,5 % de REM ; le reste étant Fe et des impuretés,
la réalisation d'un usinage à chaud sur la matière première ; et
la réalisation d'un traitement thermique par solution sur la matière première après l'usinage à chaud à une température de traitement thermique par solution de 950 à 1300 °C dans une condition satisfaisant à la formule fournie ci-dessous (1),
dans lequel un usinage à froid n'est pas réalisé entre l'usinage à chaud et le traitement thermique par solution, et
dans un refroidissement pour le traitement par solution, un taux de refroidissement dans la plage de température de 1100 à 600 °C n'est pas inférieur à 0,5 °C/sec.,

$$40 \times [\%Nb] + 100 \leq T \times \log(1{,}2 + t/60) \leq -200 \times [\%Nb] + 700 \qquad (1),$$

EP 3 358 030 B1

dans la formule (1), la teneur en Nb dans la matière première en % en masse est remplacée par [%Nb], la température de traitement thermique par solution en °C est remplacée par T, et le temps de traitement thermique par solution en minutes est remplacé par t.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2004083476 A1
- WO 2004083477 A1
- WO 2004110695 A1
- WO 2012132992 A1

- JP HEI51993192785 A
- JP 2010227949 A
- WO 2013005570 A1
- EP 1577414 A

**Non-patent literature cited in the description**

- *MATERIALS PERFORMANCE, NACE INTERNATIONAL,* 01 January 2007, vol. 46 (1), 58-60